Europäisches Patentamt

(19) European Patent Office

Office européen des brevets

(11) Publication number: **0 029 638**
**B1**

(12) **EUROPEAN PATENT SPECIFICATION**

(45) Date of publication of patent specification: **01.02.84**

(51) Int. Cl.³: **G 01 D 11/28,**
**G 12 B 11/02**

(21) Application number: **80301910.8**

(22) Date of filing: **06.06.80**

(54) Laminar light guide and an instrument display means comprising such a light guide.

(30) Priority: **27.11.79 GB 7940914**

(43) Date of publication of application:
**03.06.81 Bulletin 81/22**

(45) Publication of the grant of the patent:
**01.02.84 Bulletin 84/5**

(84) Designated Contracting States:
**DE FR GB SE**

(56) References cited:
**EP - A - 0 006 361**
**FR - A - 1 145 934**
**FR - A - 1 278 703**
**FR - A - 2 174 380**
**US - A - 2 900 949**

(73) Proprietor: **Combined Optical Industries Limited**
**200 Bath Road**
**Slough Berkshire SL1 4DW (GB)**

(72) Inventor: **Pasco, Ian Kenneth**
**The Nook Cocks Lane Wonfield**
**Bracknell Berks (GB)**

(74) Representative: **Milhench, Howard Leslie et al,**
**A.A. Thornton & Co. Northumberland House**
**303/306 High Holborn**
**London, WC1V 7LE (GB)**

Courier Press, Leamington Spa, England.

Laminar light guide and an instrument display means comprising such a light guide

The invention relates to a light guide having particular but not exclusive application to illuminated instrument panel displays for vehicles, and more particularly comprising a transparent lamina provided with a light input arrangement, a light source for injecting light into the lamina through the input arrangement, and means for selectively directing light out of the lamina transversely thereof at selected locations.

An instrument panel of this kind is known from US—A—2,900,949 in which a transparent lamina is illuminated by a light source inserted into an aperture at a side of the lamina. The lamina is provided with an instrument scale which is illuminated with light from the lamina. A pointer is provided for the scale, also illuminated with light from the lamina. In order to provide satisfactory illumination for the pointer, light from the source is concentrated in the region where the pointer is mounted by providing the lamina with a parabolic periphery around the light source.

A similar instrument panel is shown in European Patent Application published under No. EP—A—0006361 (which is relevant to the invention solely by virtue of Article 54(3) EPC) in which the light source is mounted at the edge of the lamina, with the lamina edge being shaped to define a lens which aids in injecting light into the lamina. Both of these specifications disclose arrangements which achieve a satisfactory coupling of light energy from the light sources into the lamina, by virtue of providing the light source directly adjacent surfaces of the lamina which are transversely disposed to the major extent of the lamina. Accordingly, the light sources have to be disposed at or adjacent the side of the laminae otherwise they would interfere with the display of the instrument scale. The disposition of the light sources at the side of the laminae results in an unsatisfactory light distribution, which is overcome by providing the parabolic reflector regions. Thus, these prior laminae, suffer from the disadvantage that in order to achieve satisfactory illumination, the laminae need to be substantially larger than the area required to accommodate the instrument scale, in order to provide the parabolic reflector regions, with the disadvantage that the laminae take up more space in an instrument panel than is necessary for displaying the instrument scale.

In FR—A—2174380 there is disclosed an arrangement in which light is injected into a transparent lamina by means which are not necessarily disposed at or adjacent the edge of the lamina. Light is injected by members inserted into apertures in the lamina, the members having a fibre optic light guides coupled thereto and including a conical reflective surface which directs light from the light guide into the lamina. The light guides are arranged to collect light from a high power lamp and because the lamp is spaced via the fibre optic light guides from the lamina, the lamina is not heated by the light source. However this arrangement suffers from the disadvantage that it comprises a large number of components, rendering it expensive to produce and moreover the coupling from the light guides to the lamina is not particularly efficient, which means that the lamp cannot be mounted directly adjacent the lamina because to be sufficiently powerful to illuminate the lamina, the lamp produces a substantial amount of heat and needs to be spaced from the lamina by fibre optic light guides.

The present invention seeks to provide a laminar light guide suitable for an instrument panel display wherein the coupling of light from the source to the lamina is sufficiently satisfactory for the light source to be mounted directly adjacent the lamina, wherein also the lamina need not be substantially larger than the area required to display the instrument scale and furthermore wherein the light input arrangement can be integrally formed with the lamina in order to minimise manufacturing costs.

The present invention is characterised in that the light input arrangement comprises a lamp socket upstanding from one side of the lamina between an edge and the centre of the lamina, the lamp socket having therein an opening with a base that defines a lens with its optical axis disposed transversely of the lamina, and a recess in the other side of the lamina, the recess defining a surface region which is reflective to light directed thereon by the lens and which directs the reflected light in directions both towards said edge and the centre of the lamina, the lamp socket and the recess being formed integrally with the lamina, in that the light source comprises a lamp positioned within the opening of the lamp socket, and in that the socket is so arranged that light from the lamp is collected by the lens, directed by the lens onto the reflective surface region of the recess and thereby reflected transversely of the lens axis into the lamina.

In accordance with the present invention an efficient coupling of light from the lamp into the lamina is achieved without injecting light directly into a side edge of the lamina, but by an arrangement which allows the lamp to be positioned directly adjacent one side of the lamina and not necessarily at the edge thereof. Thus a designer utilising the invention is not constrained to position the lamp at the edge of the lamina, but can position the lamp to achieve an optimum light distribution within the lamina, and without the need to provide space consuming parabolic reflector regions as in the aforementioned prior arrangements. Moreover the light input arrangement of the light guide according to the invention is formed integrally with the lamina and moreover provides a sufficiently efficient coupling of light to the lamina to allow a low power lamp to be positioned directly adjacent the lamina.

In order that the invention may be more fully understood an embodiment thereof will now be described by way of example with reference to the accompanying drawings wherein:

Figure 1 illustrates a light guide suitable for use to illuminate an instrument panel;

Figure 2 is a cross-sectional view along the line A—A of Figure 1, also including an indicator instrument needle;

Figure 3 is a plan view of the instrument needle shown in Figure 2; and

Figure 4 is a cross-sectional view through line B—B of Figure 1 illustrating integral lenses.

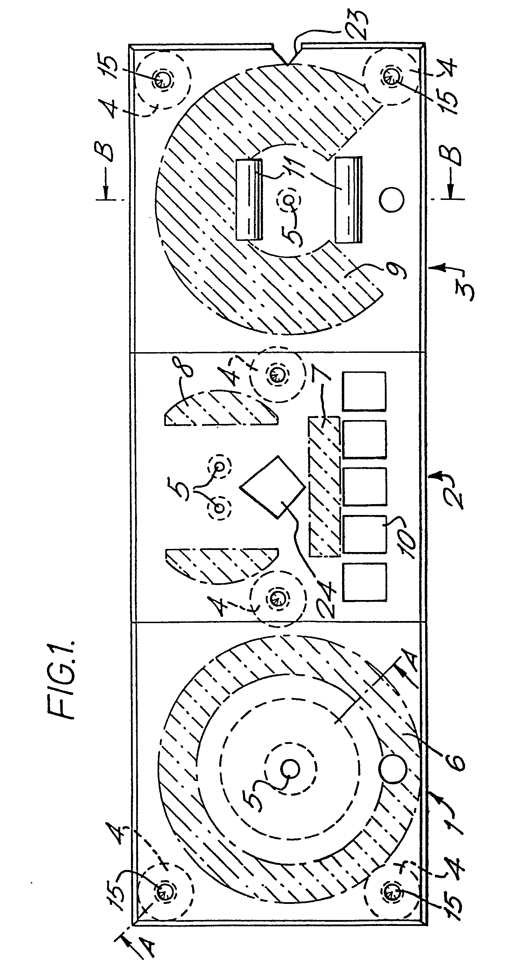

Figure 1 shows a laminar light guide, suitable for illuminating the dashboard instrument displays of an automobile, which consists of three units, a clock panel 1, a minor instrument panel 2, and a tachometer panel 3. Each panel consists of a moulded transparent plastics lamina, the end panels 1 and 3 each having three bilaterally 45° chamfered edges and one plane edge which abuts a plane edge of the central minor instrument panel 2. The remaining two edges of the minor instrument panel 2 are also chamfered. Lamp sockets 4 are integrally moulded with the laminas, in this embodiment two lamp sockets for each panel unit, into which 1.2 watt bulbs of about 5 mm diameter and 12 mm height can be inserted. These sockets are provided on the reverse of the panels 1, 2 and 3 as viewed in Figure 1 and as ultimately mounted in the dashboard. Conical apertures 5 which are also integrally moulded with the lamina are provided for the supporting pins of instrument needles. The apertures define truncated cones of 45° semi-vertical angle with the base of the cone, i.e. the larger radius, on the reverse of the panels.

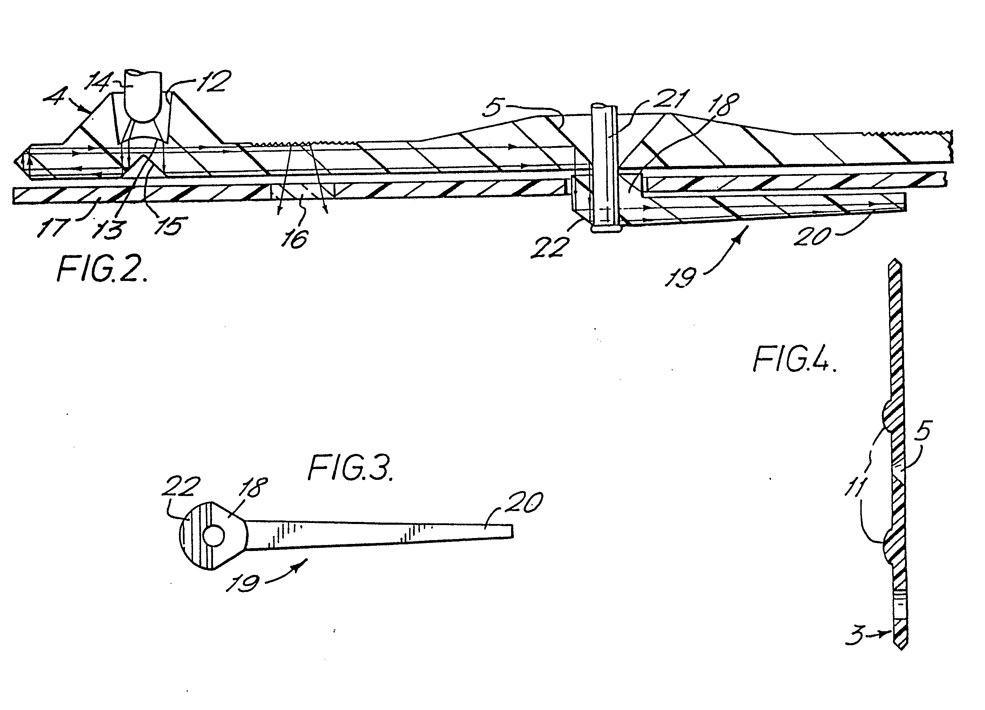

Shaded areas 6, 7, 8 and 9 correspond to roughened surface regions on the reverse of the panels which serve to disperse light out of the laminas. When mounted on the dashboard these roughened areas are aligned with and serve to illuminate translucent, character defining areas of an otherwise opaque screen 17 overlying the light guide. The conical apertures 5 also serve to deflect light out of the laminas, in this case to illuminate indicator needles of the dashboard instruments. The function of the panels as a light guide and the optical paths are explained fully hereinafter with reference to Figure 2. Apertures 10 are provided in the lamina for accommodating devices such as switches or warning lamps. Other areas 11 are provided for enabling reading of mechanical register displays such as mileometer and tripmeter displays behind the lamina and these areas may be simple apertures providing visual access to the registers or may be integrally lensed for enhancing the readability of the registers. A cross-sectional view through exemplary lenses 11 may be seen in Figure 4. The opaque screen 17 will be provided with apertures and/or other display features corresponding to the positions of apertures 10 and lenses 11 and either the screen or the lenses may be masked to separate the characters of the mechanical register and conceal mechanisms such as interdigit rachets.

Each of the panels can be injection moulded if they are designed, as in this embodiment, so as to avoid re-entrant shapes. The panels are preferably manufactured of acrylic plastics through they can be fabricated from any suitable optical quality transparent material including celluloid, nitrocellulose, perspex, acrylonitrile, polysulphones, polystyrene and polycarbonate.

Figure 2 is a cross-sectional view diagonally across clock panel 1, as shown by arrows A—A in Figure 1, illustrated for convenience with a lamp in the lamp socket. From this Figure it can be seen that the lamp socket 4 is spaced inwardly from the edge of the lamina. The socket 4 comprises a conical frustum with a central opening 12. The base of opening 12 is convex and forms a spherical lens 13 for incident light from a lamp 14 in the lamp socket 4, the lens having an optical axis transverse to the plane of the lamina. Aligned with and on the opposite (front) side of the lamina to the lamp socket 4 there is a 45° semi-vertical angle conical recess 15. Divergent light from lamp 14 is collumated by spherical lens 13 and the resultant parallel beam is then internally reflected by the surface of recess 15 into the plane of the lamina. After this reflection the light has a radial distribution about recess 15, which thus distributes light throughout the lamina both to the centre and to the outer edges. The 45° chamfering of the outer edges of the panels ensures that light incident on these edges does not emerge from the laminas, but is internally reflected back into the plane of the lamina.

As the light is transmitted within the lamina some of it encounters the roughened surface 6 and is scattered out of the plane of the lamina and through translucent characters 16 on opaque screen 17 disposed adjacent the front of the lamina. This produces diffuse illumination of the translucent characters, which may be coloured, or the lamina or lamp coloured, to give a coloured display. Only the light travelling near the roughened surface and incident stray beams not parallel to the plane of the lamina are dispersed by surface 6, and a large proportion of the light continues to the conical aperture 5. At this aperture light is internally reflected and passes forwardly out of the lamina and into the shaft 18 of transparent clock hand 19 with pointer 20 which is supported on a pin 21 passing through aperture 5. The shaft 18 has a 45° bevelled facet 22 on the opposite half of the shaft to that which carries the pointer 20.

Facet 22 provides a surface from which light transmitted out of the lamina by conical aperture 5 is internally reflected into the pointer 20. The half of the shaft which carries the pointer 20 is tapered towards the pointer, which itself has a tapering rectangular section.

Clock hand 19, which is illustrated in plan in Figure 3, is preferably made of the same material as the lamina, and has a matt coloured surface along the underside of the pointer. Alternatively the pointer may be coloured or a colour filter may be inserted in the light path between the lamina and the pointer. Pivot pin 21 is made as small as possible, and is preferably transparent.

The thickness of the lamina is progressively increased towards the feature 5 which not only facilitates the mounting of more than one clock hand, although only one is shown for convenience, but also causes the projection of the walls of frustum aperture 5 on the plane of the lamina to be larger and so enables a greater hand boss diameter to be used thereby increasing the transfer of light into the clock hand.

Referring to Figure 1, it can be seen that there is a notch 23 in the chamfered edge between the lamp sockets 4 of the tachometer panel 3. This notch 23 presents 45° surfaces from which light travelling in the direction from one corner socket 4 of panel 3 to the other is reflected towards the needle aperture 5. This notch 23 is particularly advantageous if rather than lenses 11 correspondingly positioned apertures are provided which thereby obstruct the passage of light directly from the lamp sockets 4 to the needle aperture 5. A diamond shaped aperture 24 is provided centrally of panel 2 for a similar purpose, namely to enhance the illumination of the features 5 by light from the edge sockets 4 of panel 2.

The panels may be secured by screws passing through holes (not shown) in the laminas, or the panels may be held in slotted recesses in a supporting frame.

## Claims

1. A light guide comprising a transparent lamina (1, 2, 3) provided with a light input arrangement (4), a light source (14) for injecting light into the lamina through the input arrangement, and means for selectively directing light out of the lamina transversely thereof at selected locations, characterised in that the lamp input arrangement (4) comprises a lamp socket upstanding from one side of the lamina between an edge and the centre of the lamina, the lamp socket having therein an opening (12) with a base that defines a lens (13) with its optical axis disposed transversely of the lamina (1, 2, 3), and a recess (15) in the other side of the lamina (1, 2, 3) the recess defining a surface region which is reflective to light directed thereon by the lens (13) and which directs the reflected light in directions both towards said edge and the centre of the lamina, the lamp socket (4) and the recess (15) being formed integrally with the lamina, in that the light source comprises a lamp (14) positioned within the opening (12), and in that the socket (4) is so arranged that light from the lamp (14) is collected by the lens (13), directed by the lens (13) onto the reflective surface region of the recess (15) and thereby reflected transversely of the lens axis into the lamina.

2. A light guide according to claim 1 wherein said recess (15) is a conical recess providing a reflective surface region which directs light into the lamina in all directions extending radially outwardly of the optical axis of the lens (13).

3. A light guide as claimed in claim 1 or 2 wherein at least one edge of the lamina (1, 2, 3) is formed such that light travelling in the lamina and which is incident upon such edge is internally reflected back into the lamina.

4. A light guide as claimed in claim 3 wherein the or each edge is bilaterally chamfered.

5. A light guide as claimed in any one of the preceding claims, wherein one or more further lenses (11) are integrally formed within the lamina (1, 2, 3).

6. A light guide as claimed in any preceding claim wherein the means for selectively directing light out of the lamina includes at least one roughened surface area (6, 7, 8, 9) for reflecting light incident thereon diffusely out of the lamina (1, 2, 3).

7. A light guide as claimed in any preceding claim wherein the means for selectively directing light out of the lamina includes at least one aperture (5) formed in the lamina, a surface defining said aperture being disposed to reflect light travelling in the lamina (1, 2, 3) into a beam travelling transversely of the lamina (1, 2, 3).

8. An instrument display means comprising a light guide as claimed in any one of the preceding claims, disposed behind an instrument panel comprising an opaque screen (17) having translucent characters (16) and/or openings formed therein which are arranged to be illuminated by light directed out of the lamina by the directing means.

9. An instrument display means as claimed in claim 8 wherein the directing means is as claimed in claim 6 characterised in that the light beam is directed into a further light guide which is mounted to an instrument to act as a pointer.

## Patentansprüche

1. Lichtleiter, der eine lichtdurchlässige Schicht (1, 2, 3) aufweist, die eine Lichteinlaßvorrichtung (4), eine durch die Einlaßvorrichtung Licht in die Schicht einstrahlende Lichtquelle (14) und Vorrichtungen, um Licht gezielt an vorbestimmten Stellen quer zu der Schicht aus der Schicht herauszuleiten, aufweist, dadurch gekennzeichnet, daß die Lampeneinlaßvorrichtung (4) eine Lampenfassung aufweist, die zwischen einem Rand und dem Zentrum der Schicht aufrecht steht, daß die Lampenfassung eine darin ausgebildete Öffnung (12) aufweist, mit einer Basis, die eine Linse (13) begrenzt, deren optische Achse quer zur Schicht (1, 2, 3) verläuft und mit einer Aussparung (15) auf der anderen Seite der Schicht (1, 2, 3), wobei die Aussparung einen Oberflächenbereich begrenzt, der hierauf durch die Linse (13) geleitetes Licht reflektiert und der das reflektierte Licht in Richtungen sowohl auf den Rand als auch auf das Zentrum der Schicht lenkt, daß die Lampenfassung (4) und die Aussparung (15) mit der Schicht einstückig ausgebildet sind, daß die Lichtquelle eine in der Öffnung (12) angeordnete Lampe (14) aufweist und daß die Fassung (4) so angeordnet ist, daß das Licht der Lampe (14) durch die Linse (13) gesammelt und durch sie auf den reflektierenden Flächenbereich der Aussparung (15) gelenkt und dadurch quer zu der Linsenachse in die Schicht reflektiert wird.

2. Lichtleiter nach Anspruch 1 bei dem die Aussparung (15) eine konische Aussparung ist, die einen reflektierenden Oberflächenbereich aufweist, der Licht in alle sich radial von der optischen Achse der Linse (13) nach außen erstreckende Richtungen lenkt.

3. Lichtleiter nach Anspruch 1 oder 2 bei dem wenigstens ein Rand der Schicht (1, 2, 3) so ausgebildet ist, daß in der Schicht sich ausbreitendes und auf einen solchen Rand auffallendes Licht innenseitig wieder in die Schicht reflektiert wird.

4. Lichtleiter nach Anspruch 3 bei dem der oder jeder Rand beidseitig abgeschrägt ist.

5. Lichtleiter nach einem der vorangehenden Ansprüche bei dem eine oder mehrere weitere Linsen (11) mit der Schicht (1, 2, 3) einstückig ausgebildet sind.

6. Lichtleiter nach einem der vorangehenden Ansprüche bei dem die Vorrichtung zum gezielten Ausleiten von Licht aus der Schicht heraus wenigstens einen aufgerauhten Oberflächenbereich (6, 7, 8, 9) aufweist, um, hierauf auftreffendes Licht diffus aus der Schicht (1, 2, 3) nach außen zur reflektieren.

7. Lichtleiter nach einem der vorangehenden Ansprüche bei dem die Vorrichtung zum gezielten Ausleiten von Licht aus der Schicht wenigstens eine in der Schicht ausgebildete Öffnung (5) aufweist wobei eine Fläche, die diese Öffnung begrenzt so angeordnet ist, daß in der Schicht (1, 2, 3) sich ausbreitendes Licht zu einem Strahl reflektiert wird, der sich quer zu der Schicht (1, 2, 3) ausbreitet.

8. Instrumentenanzeigevorrichtung, mit einem Lichtleiter nach einem der vorangehenden Ansprüche, der hinter einer Instrumententafel angeordnet ist, die einen lichtundurchlässigen Schirm (17) aufweist, der lichtdurchlässige Zeichen (16) und/oder in ihm ausgebildete Öffnungen aufweist, die durch aus der Schicht mittels Ablenkvorrichtungen herausgeleitetes Licht beleuchtet sind.

9. Instrumentenanzeigevorrichtung nach Anspruch 8, mit der Ablenkvorrichtung nach Anspruch 6, dadurch gekennzeichnet, daß der Lichtstrahl in einen weiteren, mit einem Instrument verbundenen und als Zeiger dienenden Lichtleiter gelenkt ist.

**Revendications**

1. Guide de lumière comprenant une lamelle transparente (1, 2, 3) ayant un arrangement d'introduction de lumière (4), une source lumineuse (14) destinée à injecter de la lumière dans la lamelle par l'intermédiaire de l'arrangement d'introduction, et un dispositif destiné à diriger sélectivement la lumière hors de la lamelle transversalement à celle-ci à des emplacements choisis, caractérisé en ce que l'arrangement (4) d'introduction à lampe comporte un logement de lampe dépassant d'un côté de la lamelle entre un bord et le centre de celle-ci, le logement de lampe ayant un orifice (12) qui a une base qui délimite une lentille (13) dont l'axe optique est disposé transversalement à la lamelle (1, 2, 3), et une cavité (15) placée de l'autre côté de la lamelle (1, 2, 3), la cavité délimitant une région superficielle qui réfléchit la lumière dirigée sur elle par la lentille (13) et qui dirige la lumière réfléchie à la fois vers le bord et le centre de la lamelle, le logement de lampe (4) et la cavité (15) étant formés solidairement de la lamelle, en ce que la source lumineuse est une lampe (14) placée dans l'orifice (12), et en ce que le logement (4) est disposé de manière que la lumière de la lampe (14) soit collectée par la lentille (13), dirigée par la lentille (13) sur la région de surface réfléchissante de la cavité (15), puis réfléchie transversalement à l'axe de la lentille, dans la lamelle.

2. Guide de lumière selon la revendication 1, dans lequel la cavité (15) est une cavité conique formant une région superficielle réfléchissante qui dirige la lumière dans la lamelle dans toutes les directions radialement vers l'extérieur de l'axe optique de la lentille (13).

3. Guide de lumière selon l'une des revendications 1 et 2, dans lequel un bord au moins de la lamelle (1, 2, 3) est réalisé de manière que la lumière se propageant dans la lamelle et qui parvient sur ce bord est renvoyée intérieurement dans la lamelle.

4. Guide de lumière selon la revendication 3, dans lequel le bord ou chaque bord a un chanfrein des deux côtés.

5. Guide de lumière selon l'une quelconque des revendications précédentes, caractérisé en ce qu'une ou plusieurs lentilles supplémentaires (11) sont formées en une seule pièce dans la lamelle (1, 2, 3).

6. Guide de lumière selon l'une quelconque des revendications précédentes, dans lequel le dispositif destiné à diriger sélectivement la lumière hors de la lamelle comporte au moins une zone superficielle dépolie (6, 7, 8, 9) destinée à réfléchir la lumière qui lui parvient sous forme diffuse à l'extérieur de la lamelle (1, 2, 3).

7. Guide de lumière selon l'une quelconque des revendications précédentes, dans lequel le dispositif destiné à diriger sélectivement la lumière hors de la lamelle comprend au moins une ouverture (5) formée dans la lamelle, une surface délimitant cette ouverture étant disposée afin qu'elle réfléchisse la lumière qui se propage dans la lamelle (1, 2, 3) sous forme d'un faisceau se propageant transversalement à la lamelle (1, 2, 3).

8. Dispositif d'affichage d'instrument, comprenant un guide de lumière selon l'une quelconque des revendications précédentes, placé derrière un panneau d'instrument comprenant un écran opaque (17) ayant des caractères translucides (16) et/ou des orifices formés dans l'écran et disposés de manière qu'ils soient éclairés par la lumière dirigée en dehors de la lamelle par le dispositif destiné à diriger.

9. Dispositif d'affichage d'instrument selon la revendication 8, dans lequel le dispositif destiné à diriger est tel que revendiqué dans la revendication 6, caractérisé en ce que le faisceau lumineux est dirigé dans un guide de lumière supplémentaire qui est monté sur un instrument afin qu'il joue le rôle d'une aiguille.

FIG.1.

FIG.2.

FIG.3.

FIG.4.